# EUROPEAN PATENT SPECIFICATION

(11) **EP 3 255 942 B1**
(45) Date of publication and mention of the grant of the patent: **26.06.2019**
(21) Application number: 17157461.9
(22) Date of filing: 22.02.2017
(51) Int. Cl.: H04W 68/00, H04W 88/06

(54) **PAGING METHOD AND DEVICE**
FUNKRUFVERFAHREN UND VORRICHTUNGEN
PROCÉDÉ ET DISPOSITIFS DE RADIOMESSAGERIE

(30) Priority: 08.06.2016 WO PCT/CN2016/085249
(43) Date of publication of application: 13.12.2017
(73) Proprietor: Beijing Xiaomi Mobile Software Co., Ltd., Beijing 100085 (CN)
(72) Inventor: CUI, Hengbin, Beijing, Beijing 100085 (CN); SUN, Long, Beijing, Beijing 100085 (CN); GE, Qi, Beijing, Beijing 100085 (CN)
(74) Representative: dompatent von Kreisler Selting Werner - Partnerschaft von Patent- und Rechtsanwälten mbB

(56) References cited:
- WO-A1-2010/019364
- US-A1- 2015 023 258
- US-A1- 2015 230 199
- "3rd Generation Partnership Project; Technical Specification Group Services and System Aspects; Circuit Switched (CS) fallback in Evolved Packet System (EPS); Stage 2 (Release 13)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V13.3.0, 15 March 2016 (2016-03-15), pages 1-101, XP051087936, [retrieved on 2016-03-15]

## Description

### TECHNICAL FIELD

The present disclosure generally relates to the technical field of communication, and more particularly, to a paging method, a paging device and a paging system.

### BACKGROUND

Compared with 2G/3G networks, a Long Term Evolution (LTE) network only has a Packet Switched (PS) Domain and no Circuit Switched (CS) Domain. In the LTE network, a Voice over LTE (VoLTE) based on an IP Multimedia Subsystem (IMS) is a solution to realize voice service. The VoLTE can cooperate with the LTE network or the 4G Evolution Packet Core (EPC) to realize an end-to-end voice service based on the PS domain.

To call a terminal, a base station may send a paging message to the terminal. The paging message carries with a Core network Domain (Cn-Domain) name field. The Cn-Domain name field may have a value of PS or CS. That is, when the voice call is performed with VoLTE, the Cn-Domain name field may have a value of PS, and when the voice call is performed with 2G/3G based on the traditional circuit domain, the Cn-Domain name field may have a value of CS.

### Prior art is

- US 2015/230199 A1 published on 13 August 2015,
- 3GPP TS 23.272 V13.3.0 published on 15 March 2016,
- WO 2010/019364 A1 published on 18 February 2010, and
- US 2015/023258 A1 published on 22 January 2015.

### SUMMARY

The invention is defined in independent claims 1 and 3. Further features are defined in dependent claims. In the following, the parts of the description and drawings referring to embodiments which are not covered by the claims are not presented as embodiments of the invention but as background art or examples useful for understanding the invention.

The technical solution provided by the embodiment of the present disclosure may have the following beneficial effects.

By additionally providing a value for the Core network Domain name field, the terminal being called may learn about whether the current paging message corresponds to the voice service of the PS domain according to the value of the Core network Domain name field. It can solve the problem that the voice service of the PS domain tends to be missed due to a low priority of such paging message. It can achieve the effect that the terminal being called may learn about the type of the service in the paging stage, and may process the voice service of the PS domain with a higher priority.

It is to be understood that both the foregoing general description and the following detailed description are exemplary only and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating a paging system according to an exemplary embodiment;
Fig. 2 is a block diagram illustrating a network access device according to an exemplary embodiment;
Fig. 3 is a block diagram illustrating a terminal according to an exemplary embodiment;
Fig. 4 is a flow chart illustrating a method for sending a message according to an exemplary embodiment;
Fig. 5 is a flow chart illustrating a method for sending a message according to an exemplary embodiment;
Fig. 6 is a block diagram illustrating a device for sending a message according to an exemplary embodiment; and
Fig. 7 is a block diagram illustrating a device for sending a message according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

As used herein, "unit" may refer to a program or instruction stored in a memory for implementing some functions. Also, as used herein, "module" may refer to functional structure divided logically. A "module" may be implemented with pure hardware, or with combination of software and hardware.

It should be understood that, the term "a plurality of' used herein refers to two or more than two. The term "and/or" is used to describe a correlation between associated objects. It means three kinds of correlations. For example, A and/or B may mean that: only A exists; both A and B exist; and only B exists. The symbol "/" generally means the former object and the latter object have an "or" relationship.

It should be understood that, although it may describe an element with a term first, second, or third, etc., the element is not limited by these terms. These terms are merely for distinguishing among elements of the same kind. For example, without departing from the scope of the present disclosure, a first priority can also be referred to as a second priority. Similarly, a second priority can also be referred to as a first priority. Depending on the context, a term "if' as used herein can be interpreted as "when", "where" or "in response to".

In an existing LTE system, the PS domain provides a voice service and a data service meanwhile. The voice service may be a VoLTE, and the data service may be a web browsing service, an instant messaging service or a navigation service, or the like. No matter the PS domain provides a voice service or a data service, when the network access device sends a paging message to the terminal, the Cn-Domain field in the paging message will always have a value of PS.

When the terminal is a dual-card dual-standby single-channel terminal, since a dual-card dual-standby single-channel terminal may support a first Subscriber Identity Module (SIM) card and a second SIM card, while the dual-card dual-standby single-channel terminal may has only one set of antenna, the permission of occupying the antenna resource may be allocated to a service with a higher priority of the priority of the first SIM card and the priority of the second SIM card in the dual-card dual-standby single-channel terminal. Generally, a paging service and a location-region updating service from the CS domain may have the highest priority since they have real-time requirements, and a paging service from the PS domain may have a lower priority since users generally tend to use the data service from the PS domain.

However, in some circumstances, for example, when the location-region updating service of the second SIM card in the dual-card dual-standby single-channel terminal occupies the antenna resource, and at the same time, the first SIM card receives a paging message using the VoLTE service, since the location-region updating service of the second SIM card has a higher priority, the paging message using the VoLTE service received by the first SIM card has a lower priority, the paging message cannot be allocated with the antenna resource, and the calling cannot be answered timely, causing a missed call. Since it is more likely to compete for the antenna resource in the dual-card dual-standby single-channel terminal, missed calls occur more often than in a single-card single-standby terminal. In order to reduce or avoid missed calls, the present disclosure provides the following embodiments.

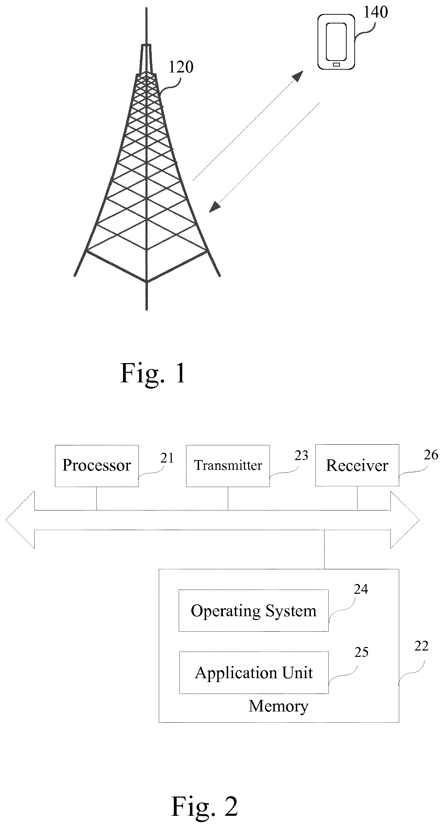

Fig. 1 is a schematic diagram illustrating a paging system provided by an exemplary embodiment. The paging system may include a network access device 120 and a terminal 140.

The network access device 120 may have functions of sending a paging message, sending downlink data or instructions and receiving uplink data or instructions. In different mobile communication systems, the network access device 120 may have the same or similar functions, or may have different names or specific implementation forms. Optionally, the network access device 120 may be a Base Transceiver Station (BTS) in a Global System for Mobile communication (GSM) or a Code Division Multiple Access (CDMA). Optionally, the network access device may be a base station (NodeB) in a Universal Mobile Telecommunications System (UMTS). Optionally, the network access device may be an evolution Node B (eNB or e-NodeB) in Long Term Evolution (LTE). In actual networking, the network access device 120 may be implemented as a macro base station, a micro base station, a pico base station, a repeater, or the like. In embodiments of the present disclosure, specific number and specific installation locations of the network access device 120 are not limited.

The terminal 140 may have functions of sending an uplink reference signal, receiving a downlink reference signal, sending uplink data or instructions, receiving downlink data or instructions. In different mobile communication systems, the terminal 140 may have the same or similar functions, or may have different names or specific implementation forms. Optionally, the terminal 140 may be a subscriber unit, a subscriber station, a mobile station, a mobile, a remote station, an access point, a remote terminal, an access terminal, a user terminal, a user agent, a user device, or a user equipment (UE). In the actual networking, the terminal 140 may be implemented as a mobile phone, a tablet PC, a smart appliance, an intelligent instrument, a device in an Internet of things, a device in a car network, or the like. In embodiments of the present disclosure, specific number and specific installation locations of the terminal 140 are not limited.

Generally, the terminal 140 may reside in a cell provided by one network access device 120. When the terminal 140 communicates with the network access device 120, the terminal 140 may be in a RRC_CONNECT state and may establish a RRC (Radio Resource Control) connection. When communication is not to be conducted between the terminal 140 and the network access device 120, the terminal 140 may be in a RRC_IDLE (idle) state. In the present embodiment, when the terminal 140 is in the RRC_IDLE state:
when there is a voice service of the CS domain, i.e. a conventional call, the network access device 120 may send a paging message to the terminal 140 and the Cn-Domain field in the paging message may have a value of CS;
when there is a voice service of the PS domain, i.e. a VoLTE call, the network access device 120 may send a paging message to the terminal 140 and the Cn-Domain field in the paging message may have a value of PS-VoLTE. Through the value PS-VoLTE, the terminal 140 may learn about that the paging message is triggered by a VoLTE service, and then the terminal may raise the priority of this paging message; and
when there is a data service of the PC domain, the network access device 120 may send a paging message to the terminal 140 and the Cn-Domain field in the paging message may have a value of PS or PS-Data.

Fig. 2 is a block diagram illustrating a network access device 120 provided by an exemplary embodiment. The network access device 120 may include a processor 21, a memory 22, a transmitter 23, and a receiver 26.

The processor 21 may be coupled to the memory 22.

The processor 21 may include one or more processing cores. The processor 21 may perform various function application and process information by running software program and units.

The memory 22 may be configured to store software programs and units. The memory 22 may store an operating system 24 and at least one application unit 25 for implementing a function.

The application unit 25 may include a processing unit and a sending unit. The processing unit may be configured to acquire an identifier of a terminal being called in a voice service using the PS domain, and generate a paging message according to the identifier of the terminal being called. The paging message includes a Cn-Domain name field, and the value of the Cn-Domain name field may correspond to a voice service of a Packet Switched Domain. The sending unit may be configured to send the paging message to the terminal being called.

In addition, the memory 22 may be implemented by any type of a volatile memory device or a nonvolatile memory device or a combination thereof, such as a static random access memory (SRAM), an electrically erasable programmable read only memory (EEPROM), an erasable programmable read only memory (EPROM), a programmable read-only memory (PROM), a read-only memory (ROM), a magnetic memory, a flash memory, a magnetic disk, or an optical disk.

The transmitter 23 may include a modem unit and an antenna. Optionally, the antenna may be a multiple input multiple output (MIMO) antenna, and the MIMO antenna may surport multi-antenna port transceiving. Optionally, the MIMO antenna may include at least two transmitting antennas.

The receiver 26 may include configuration the same or similar as that of the transmitter 23. Optionally, the receiver 26 may include a modem unit and an antenna. Optionally, the antenna may be a MIMO antenna, and the MIMO antenna may include at least two receiving antennas.

It should be appreciated by those skilled in the art that the configuration of the network access device 120 as shown in Fig. 2 does not constitute restriction to the network access device 120, and the network access device 120 may include more or less components than those shown in Fig. 2 or may include some combinations of the components as shown in Fig. 2 or include different components from those shown in Fig. 2.

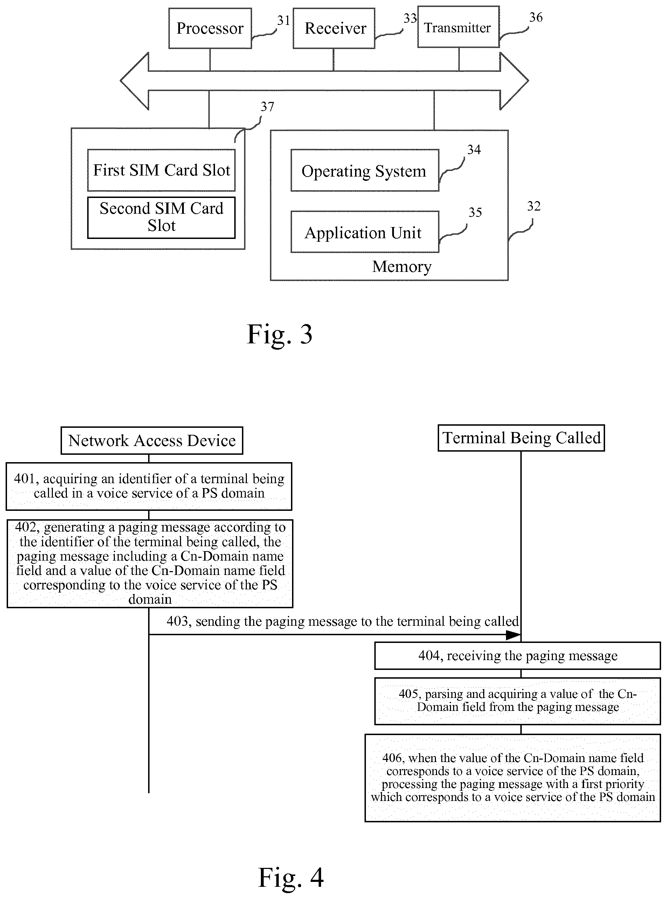

Fig. 3 is a block diagram illustrating a terminal 140 provided by an exemplary embodiment. The terminal 140 may include a processor 31, a memory 32, a receiver 33, and a transmitter 36.

The processor 31 may be coupled to the memory 32.

The processor 31 may include one or more processing cores. The processor 31 may perform various function applications and process information by running software program and units.

The memory 32 may be configured to store software programs and units. The memory 32 may further store an operating system 34 and at least one application unit 35 for implementing a function.

The application unit 35 may include a receiving unit configured to receiving a paging message; and a processing unit configured to parse and acquire a value of the Cn-Domain name field from the paging message and further configured to when the value of the Cn-Domain name field corresponds to a voice service of the PS domain, process the paging message with a first priority which corresponds to a voice service of the PS domain.

In addition, the memory 32 may be implemented by any type of a volatile memory device or a nonvolatile memory device or a combination thereof, such as a static random access memory (SRAM), an electrically erasable programmable read only memory (EEPROM), an erasable programmable read only memory (EPROM), a programmable read-only memory (PROM), a read-only memory (ROM), a magnetic memory, a flash memory, a magnetic disk, or an optical disk.

The receiver 33 may include a modem unit and an antenna. Optionally, the antenna may be a MIMO antenna, and the MIMO antenna may surport multi-antenna port transceiving. Optionally, the MIMO antenna may include at least two receiving antennas.

The transmitter 36 may include configuration the same or similar as that of the receiver 33. Optionally, the transmitter 36 may include a modem unit and a MIMO antenna. Optionally, the MIMO antenna may include at least two transmitting antennas.

In an optional embodiment, the terminal 140 may also include two SIM card slots 37, and the terminal 140 may support dual-card dual-standby single-channel function through the two SIM card slots 37.

It should be appreciated by those skilled in the art that the configuration of the terminal 140 as shown in Fig. 3 does not constitute restriction to the terminal 140, and the terminal 140 may include more or less components than those shown in Fig. 3 or may include some combinations of the components as shown in Fig. 3 or include different components from those shown in Fig. 3.

Fig. 4 is a flow chart illustrating a paging method provided by an exemplary embodiment. In the embodiment, for example, the paging method may be applied in a paging system as shown in Fig. 1. The paging method may include the following steps.

At step 401, a network access device acquires an identifier of a terminal being called in a voice service of a PS domain.

At step 402, the network access device generates a paging message according to the identifier of the terminal being called, the paging message including a Cn-Domain name field and a value of the Cn-Domain name field corresponding to the voice service of the PS domain.

At step 403, the network access device sends the paging message to the terminal being called.

At step 404, the terminal being called receives the paging message.

At step 405, the terminal being called parses and acquires a value of the Cn-Domain field from the paging message.

At step 406, when the value of the Cn-Domain name field corresponds to a voice service of the PS domain, the paging message is processed with a first priority which corresponds to a voice service of the PS domain.

Accordingly, in the paging method provided by the present embodiment, by additionally providing a value for the Core network Domain name field, the terminal being called may learn about whether the current paging message corresponds to the voice service of the PS domain according to the value of the Core network Domain name field. It can solve the problem that the voice service of the PS domain tends to be missed due to a low priority of such paging message. It can achieve an effect that the terminal being called may learn about the type of the service in the paging stage, and may process the voice servic of the PS domain with a higher priority.

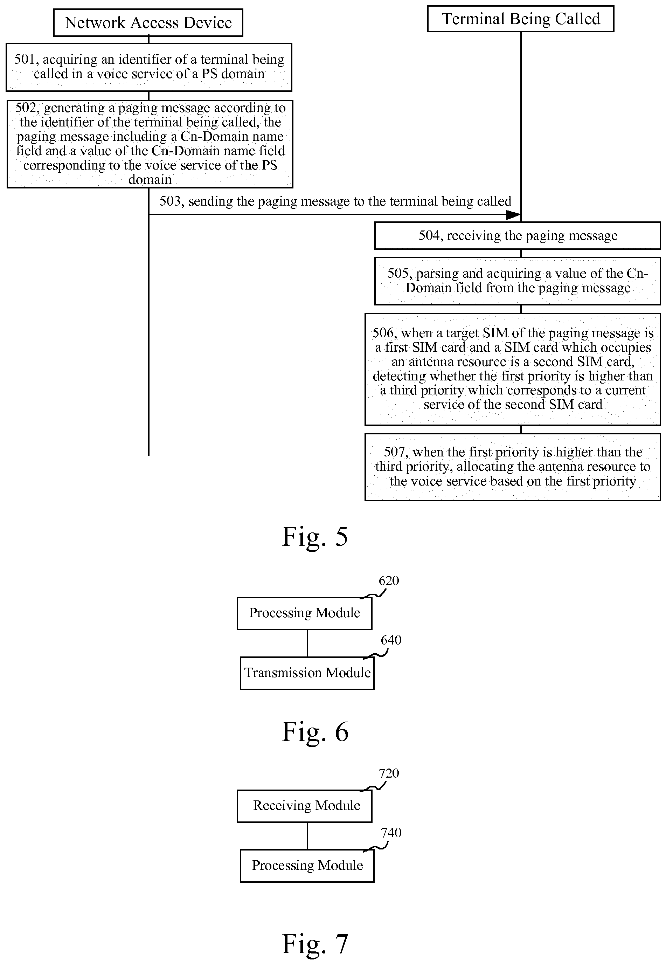

Fig. 5 is a flow chart illustrating a paging method provided by an exemplary embodiment. In the embodiment, for example, the paging method may be applied in a paging system as shown in Fig. 1, and the terminal 140 in the paging system is a dual-card dual-standby single-channel terminal. The paging method may include the following steps.

At step 501, a network access device acquires an identifier of a terminal being called in a voice service of a PS domain.

A terminal (calling terminal) may call another terminal (terminal being called) using a voice service of the PS domain. When the network access device receives a calling request from the calling terminal, the network access device may acquire an identifier of the terminal being called.

Optionally, in a LTE communication system, the voice service of the PS domain may refer to a VoLTE service. In other communciation systems, there may be voice services of the PS domain of other types.

Optionally, the identifier of the terminal being called may be an International Mobile Equipment Identity (IMEI). When the terminal being called is a dual-card dual-standby single-channel terminal, each SIM in the terminal being called may have an identifier.

At step 502, the network access device generates a paging message according to the identifier of the terminal being called, the paging message including a Cn-Domain name field and a value of the Cn-Domain name field corresponding to the voice service of the PS domain.

As an example, the paging message may have the following format:

```
    Message cl: paging:
      {
       pagingRecordList
       {
          {
       Ue-Identity s-TMSI;
           Cn-Domain;
       } } }
```

Where, *paging* represents the message is a paging message. The *Ue-Identity* field denotes the identifier of the terminal being called. In the paging message, the identifier of the terminal being called is represented by a SAE-Temporary Mobile Subscriber Identity (S-TMSI). The *Cn-Domain* field denotes the core network domain name field.

In the present embodiment, the Cn-Domain field may have one of the following three values: CS, PS-VoLTE and PS. When there is a voice service from the CS domain, the Cn-Domain field may have a value of CS. When there is a voice service from the PS domain, the Cn-Domain field may have a value of PS-VoLTE. When there is a data service from the PC domain, the Cn-Domain field may have a value of PS.

It should be noted that, although in the embodiment the Cn-Domain field takes a value PS-VoLTE to represent the voice service of the PS domain, it is merely an example, and the present embodiment does not restrict the specific form of the value of the Cn-Domain field. For example, the value of the Cn-Domain field may take other character strings such as VoLTE, ps-VoLTE and ps-Voice, as long as it may indicate that the value of the Cn-Domain field corresponds to the voice service of the PS domain.

At step 503, the network access device sends the paging message to the terminal being called.

Optionally, in the LTE system, the network access device may send the paging message to the terminal being called during a previously agreed monitoring time period, and the terminal being called may receive the paging message through a monitoring manner.

Optionally, the network access device may firstly send a P Cell Radio Network Temporary Identifier (P-RNTI) corresponding to the terminal being called through a Physical Downlink Control Channel (PDCCH). The P-RNTI represents that in the current paging period there is a paging meesage corresponding to the terminal being called.

Then, the network access device may send the paging message to the terminal being called through a Physical Downlink Shared Channel (PDSCH).

Optionally, the paging message may carry the identifier of the terminal being called and the Cn-Domain field (PS-VoLTE, for example).

At step 504, the terminal being called receives the paging message.

Optionally, the terminal being called may monitor whether there is a P-RNTI corresponding to the terminal itself through PDCCH during a previously agreed monitoring time period. When there is a P-RNTI corresponding to the terminal itself, the terminal being called may determine that there is a paging message corresponding the terminal itself.

Then, the terminal being called may receive the paging message corresponding to itself through PDSCH based on PDSCH parameters instructed through PDCCH. The PDSCH parameters are sent from the network access device for informing the terminal how to receive the paging message, for example, the position of the time-frequency resource of the paging message in the PDSCH, the decoding mode and the like.

At step 505, the terminal being called parses and acquires a value of the Cn-Domain field from the paging message.

After the terminal being called receives the paging message, the terminal being called parses and acquires a value of the Cn-Domain field from the paging message. The value of the Cn-Domain field may have any one of the following three values: CS, PS-VoLTE and PS. CS may refer to a voice service of a CS domain; PS-VoLTE may refer to a voice service of a PS domain; and PS (alternatively PS-Data) may refer to a data service of a PS domain.

The terminal being called may process the paging message with a respective priority corresponding to the value of the Cn-Domain field. It may be assumed that PS-VoLTE corresponds to a first priority and PS corresponds to a second priority. Since the voice service requries a processing priority higher than that of a data service, the first priority is higher than the second priority.

However, there may be many types of services in the terminal. In the following table 1, there are only listed corresponding relationships between some services and priorities as an example. The specific implementation forms or corresponding manners of the corresponding relationships between services and priorities are not restricted thereby.

**Table 1**

| Service Type | Priority |
|---|---|
| Paging message having a value of CS, location-region updating, cells switching, other services | Highest |
| Paging message having a value of PS-VoLTE | Second Highest |
| Short message | Medium |
| Paging message having a value of PS | Low |

When the value of the Cn-Domain name field corresponds to the voice service of the PC domain, the process proceeds to step 506.

At step 506, when a target SIM of the paging message is a first SIM card and a SIM card which occupies an antenna resource is a second SIM card, it is detected whether the first priority is higher than a third priority which corresponds to a current service of the second SIM card.

When the antenna resource in the terminal is being occupied by the second SIM card, the service of the second SIM may be a service which requires a relatively high priority such as a voice service of the CS domain or location-region updating, or may be a service which requires a relatively low priority such as a data service of the PS domain.

The terminal may compare the first priority of the first SIM card and the third priority of the second SIM card. When the first priority is higher than the third priority, the process proceeds to step 507, and when the first priority is lower than the third priority, processing of paging message may be postponed.

At step 507, when the first priority is higher than the third priority, the antenna resource is allocated to the voice service based on the first priority.

The terminal may allocate the antenna resource to VoLTE based on the first priority, such that the current paging message may be responded as soon as possible, and the VoLTE service may be established in a timely manner.

Accordingly, in the paging method provided by the present embodiment, by additionally providing a value for the Core network Domain name field, the terminal being called may learn about whether the current paging message corresponds to the voice service of the PS domain according to the value of the Core network Domain name field. It can solve the problem that the voice service of the PS domain tends to be missed due to a low priority of such paging message. It can achieve an effect that the terminal being called may learn about the type of the service in the paging stage, and may process the voice servic of the PS domain with a higher priority.

The paging method provided by the present embodiment, when applied in a dual-card dual-standby single-channel terminal, can effectively avoid the problem of missing a VoLTE call by the dual-card dual-standby single-channel terminal. Thereby, it can reduce or avoid possibility of missing a VoLTE call by a dual-card dual-standby single-channel terminal, to timely respond to a VoLTE call and provide a high-quality voice call.

It should be noted that, in the above method embodiments, the steps performed by the terminal may be implemented as a separate paging method at the side of the terminal, and may be implemented by a processor executing instructions in a memory of the terminal. Likewise, the steps performed by the network access device may be implemented as a separate paging method at the side of the network access device, and may be implemented by a processor executing instructions in a memory of the network access device.

The following are device embodiments of the present disclosure, which can be configured to perform the method embodiments of the present disclosure. For details that are not disclosed in the device embodiments of the present disclosure, reference can be made to the method embodiments of the present disclosure and vice versa.

Fig. 6 is a block diagram illustrating a paging device according to an exemplary embodiment. The paging device may be implemented as the whole or a part of a network access device as shown in Fig. 1 with a dedicated hardware circuit, or a combination of hardware and software. The paging device includes:
a processing module 620 configured to acquire an identifier of a terminal being called in a voice service of a Packet Switched domain, the processing module 620 being configured to generate a paging message according to the identifier of the terminal being called, the paging message including a Core network Domain name field and a value of the Core network Domain name field corresponding to the voice service of the PS domain; and
a transmission module 640 configured to send the paging message to the terminal being called.

In an optional embodiment, the voice service of the Packet Switched domain is a Voice over Long Term Evolution VoLTE service, and the value of the Core network Domain name field is Packet Switched domain PS-VoLTE.

Accordingly, in the paging device provided by the present embodiment, by additionally providing a value for the Core network Domain name field, the terminal being called may learn about whether the current paging message corresponds to the voice service of the PS domain according to the value of the Core network Domain name field. It can solve the problem that the voice service of the PS domain tends to be missed due to a low priority of such paging message. It can achieve an effect that the terminal being called may learn about the type of the service in the paging stage, and may process the voice servic of the PS domain with a higher priority.

Fig. 7 is a block diagram illustrating a paging device according to an exemplary embodiment. The paging device may be implemented as the whole or a part of a terminal as shown in Fig. 1 with a dedicated hardware circuit, or a combination of hardware and software. The paging device includes:
a receiving module 720 configured to receive a paging message;
a processing module 740 configured to parse and acquire a value of a Core network Domain name field from the paging message; and
the processing module 740 is configured to, when the value of the Core network Domain name field corresponds to a voice service of the Packet Switched domain, process the paging message with a first priority which corresponds to a voice service of the Packet Switched domain.

In an optional embodiment, the voice service of the Packet Switched domain is a Voice over Long Term Evolution VoLTE service, and the value of the Core network Domain name field is Packet Switched domain PS-VoLTE.

Furthermore, the first priority is higher than a second priority which corresponds to a data service of the Packet Switched domain.

Furthermore, the paging device is applied in a dual-card dual-standby single-channel terminal; and

the processing module 740 is configured to, when a target Subscriber Identity Module SIM of the paging message is a first SIM card and a SIM card which occupies an antenna resource is a second SIM card, detect whether the first priority is higher than a third priority which corresponds to a current service of the second SIM card; and when the first priority is higher than the third priority, allocate the antenna resource to the voice service based on the first priority.

Accordingly, in the paging device provided by the present embodiment, by additionally providing a value for the Core network Domain name field, the terminal being called may learn about whether the current paging message corresponds to the voice service of the PS domain according to the value of the Core network Domain name field. It can solve the problem that the voice service of the PS domain tends to be missed due to a low priority of such paging message. It can achieve an effect that the terminal being called may learn about the type of the service in the paging stage, and may process the voice servic of the PS domain with a higher priority.

The paging method provided by the present embodiment, when applied in a dual-card dual-standby single-channel terminal, can effectively avoid the problem of missing a VoLTE call by the dual-card dual-standby single-channel terminal. Thereby, it can reduce or avoid possibility of missing a VoLTE call by a dual-card dual-standby single-channel terminal, to timely respond to a VoLTE call and provide a high-quality voice call.

With respect to the devices in the above embodiments, the specific manners for performing operations for individual modules therein have been described in detail in the embodiments regarding the relevant methods, which will not be elaborated herein.

## Claims

1. A paging method comprising:
receiving (404, 504) a paging message;
parsing and acquiring (405, 505) a value of a Core network Domain name field from the paging message; and
when the value of the Core network Domain name field corresponds to a voice service of the Packet Switched domain, processing (406) the paging message with a first priority which corresponds to a voice service of the Packet Switched domain,
**characterized in that**
the first priority is higher than a second priority which corresponds to a data service of the Packet Switched domain,
wherein the method is applied in a dual-card dual-standby single-channel terminal; and
processing (406) the paging message with a first priority which corresponds to a voice service of the Packet Switched domain comprises:
when a target Subscriber Identity Module SIM of the paging message is a first SIM card and a SIM card which occupies an antenna resource is a second SIM card, detecting (506) whether the first priority is higher than a third priority which corresponds to a current service of the second SIM card; and
when the first priority is higher than the third priority, allocating (507) the antenna resource to the voice service based on the first priority.

2. The method of claim 1, wherein the voice service of the Packet Switched domain is a Voice over Long Term Evolution VoLTE service, and the value of the Core network Domain name field is Packet Switched domain PS-VoLTE.

3. A paging device comprising:
a receiving module (720) configured to receive a paging message;
a processing module (740) configured to parse and acquire a value of a Core network Domain name field from the paging message; and
the processing module (740) is configured to, when the value of the Core network Domain name field corresponds to a voice service of the Packet Switched domain, process the paging message with a first priority which corresponds to a voice service of the Packet Switched domain,
**characterized in that**
the first priority is higher than a second priority which corresponds to a data service of the Packet Switched domain,
wherein the device is a dual-card dual-standby single-channel terminal; and the processing module (740) is configured to,
when a target Subscriber Identity Module SIM of the paging message is a first SIM card and a SIM card which occupies an antenna resource is a second SIM card, detect whether the first priority is higher than a third priority which corresponds to a current service of the second SIM card; and
when the first priority is higher than the third priority, allocate the antenna resource to the voice service based on the first priority.

4. The device of claim 3, wherein the voice service of the Packet Switched domain is a Voice over Long Term Evolution VoLTE service, and the value of the Core network Domain name field is Packet Switched domain PS-VoLTE.

## Patentansprüche

1. Funkrufverfahren mit folgenden Schritten:
Empfangen (404, 504) einer Funkrufnachricht;
Parsen und Erfassen (405, 505) eines Wertes eines Namensfelds einer Core Network Domain von der Funkrufnachricht; und
wenn der Wert des Namensfelds der Core Network Domain einem Sprachdienst der Packet Switched Domain entspricht, Verarbeiten (406) der Funkrufnachricht mit einer ersten Priorität, die einem Sprachdienst der Packet Switched Domain entspricht,
**dadurch gekennzeichnet, dass**
die erste Priorität höher ist als die zweite Priorität, die einem Datendienst der Packet Switched Domain entspricht,
wobei das Verfahren in einem Dual-SIM-Dual-Standby Ein-Kanal-Terminal angewendet wird;
und
wobei das Verarbeiten (406) der Funkrufnachricht mit einer ersten Priorität, die einem Sprachdienst der Packet Switched Domain entspricht, Folgendes umfasst:
wenn eine Ziel-SIM (Subscriber-Identity-Modul) der Funkrufnachricht eine erste SIM-Karte ist und eine SIM-Karte, die eine Antennenquelle nutzt, eine zweite SIM-Karte ist, Detektieren (506), ob die erste Priorität höher ist als die dritte Priorität, die einem aktuellen Dienst der zweiten SIM-Karte entspricht; und
wenn die erste Priorität höher ist als die dritte Priorität, Zuordnen (507) der Antennenressource zum Sprachdienst basierend auf der ersten Priorität.

2. Verfahren nach Anspruch 1, wobei der Sprachdienst der Packet Switched Domain ein VoLTE-Dienst (Voice Over Long Term Evolution) ist und der Wert des Namensfelds der Core Network Domain eine Packet Switched Domain, PS-VoLTE, ist.

3. Funkrufvorrichtung mit:
einem Empfangsmodul (720), das zum Empfangen einer Funkrufnachricht konfiguriert ist;
einem Verarbeitungsmodul (740), das zum Parsen und Erfassen eines Wertes eines Namensfelds einer Core Network Domain von der Funkrufnachricht konfiguriert ist; und
wobei das Verarbeitungsmodul (740) derart konfiguriert ist, dass es, wenn der Wert des Namensfelds der Core Network Domain einem Sprachdienst der Packet Switched Domain entspricht, die Funkrufnachricht mit einer ersten Priorität verarbeitet, die einem Sprachdienst der Packet Switched Domain entspricht,
**dadurch gekennzeichnet, dass**
die erste Priorität höher ist als die zweite Priorität, die einem Datendienst der Packet Switched Domain entspricht,
wobei die Vorrichtung ein Dual-SIM-Dual-Standby Ein-Kanal-Terminal ist; und
wobei das Verarbeitungsmodul (740) derart konfiguriert ist, dass, wenn eine Ziel-SIM (Subscriber-Identity-Modul) der Funkrufnachricht eine erste SIM-Karte ist und eine SIM-Karte, die eine Antennenressource nutzt, eine zweite SIM-Karte ist, es detektiert, ob die erste Priorität höher ist als die dritte Priorität, die einem aktuellen Dienst der zweiten SIM-Karte entspricht; und
dass es, wenn die erste Priorität höher ist als die dritte Priorität, die Antennenressource dem Sprachdienst basierend auf der ersten Priorität zuordnet.

4. Vorrichtung nach Anspruch 3, wobei der Sprachdienst der Packet Switched Domain ein VoLTE-Dienst (Voice Over Long Term Evolution) ist und der Wert des Namensfelds der Core Network Domain eine Packet Switched Domain, PS-VoLTE, ist.

## Revendications

1. Procédé de radiomessagerie, comprenant le fait de:
recevoir (404, 504) un message de radiomessagerie;
analyser et acquérir (405, 505) une valeur d'un champ de nom de Domaine de réseau Central du message de radiomessagerie; et
lorsque la valeur du champ de nom de Domaine de réseau Central correspond à un service vocal du domaine de Commutation de Paquets, traiter (406) le message de radiomessagerie avec une première priorité qui correspond à un service vocal du domaine de Commutation de Paquets,
**caractérisé par le fait que**
la première priorité est supérieure à une deuxième priorité qui correspond à un service de données du domaine de Commutation de Paquets,
dans lequel le procédé est appliqué dans un terminal monocanal double veille double carte; et
le traitement (406) du message de radiomessagerie avec une première priorité qui correspond à un service vocal du domaine de Commutation de Paquets comprend le fait de:
lorsqu'un Module d'Identité d'Abonné SIM cible du message de radiomessagerie est une première carte SIM et qu'une carte SIM qui occupe une ressource d'antenne est une deuxième carte SIM, détecter (506) si la première priorité est supérieure à une troisième priorité qui correspond à un service actuel de la deuxième carte SIM; et
lorsque la première priorité est supérieure à la troisième priorité, attribuer (507) la ressource d'antenne au service vocal sur base de la première priorité.

2. Procédé selon la revendication 1, dans lequel le service vocal du domaine de Commutation de Paquets est un service d'Evolution de Voix à Long Terme VoLTE, et la valeur du champ de nom de Domaine de réseau Central est le VoLTE de domaine de Commutation de Paquets PS.

3. Dispositif de radiomessagerie, comprenant:
un module de réception (720) configuré pour recevoir un message de radiomessagerie;
un module de traitement (740) configuré pour analyser et acquérir une valeur d'un champ de nom de Domaine de réseau Central à partir du message de radiomessagerie; et
le module de traitement (740) est configuré pour traiter, lorsque la valeur du champ de nom de Domaine de réseau Central correspond à un service vocal du domaine de Commutation de Paquets, le message de radiomessagerie avec une première priorité qui correspond à un service vocal du domaine de Commutation de Paquets,
**caractérisé par le fait que**
la première priorité est supérieure à une deuxième priorité qui correspond à un service de données du domaine de Commutation de Paquets,
dans lequel le procédé est appliqué dans un terminal monocanal double veille double carte; et
le module de traitement (740) est configuré pour,
lorsqu'un Module d'Identification d'Abonné SIM cible du message de radiomessagerie est une première carte SIM et qu'une carte SIM qui occupe une ressource d'antenne est une deuxième carte SIM, détecter si la première priorité est supérieure à une troisième priorité qui correspond à un service actuel de la deuxième carte SIM; et
lorsque la première priorité est supérieure à la troisième priorité, attribuer la ressource d'antenne au service vocal sur base de la première priorité.

4. Dispositif selon la revendication 3, dans lequel le service vocal du domaine de Commutation de Paquets est un service d'Evolution de Voix à Long Terme VoLTE, et la valeur du champ de nom de Domaine de réseau Central est le VoLTE de domaine de Commutation de Paquets PS.
